# EUROPEAN PATENT SPECIFICATION

(11) **EP 2 960 104 B1**
(45) Date of publication and mention of the grant of the patent: **19.04.2017**
(21) Application number: 14173885.6
(22) Date of filing: 25.06.2014
(51) Int. Cl.: B60N 2/02, B60N 2/16

(54) **A method and system for setting the relative vertical distance between a vehicle seat and at least a further vehicle component**
Verfahren und System zur Einstellung des relativen vertikalen Abstandes zwischen einem Fahrzeugsitz und mindestens einer weiteren Fahrzeugkomponente
Procédé et système permettant de régler la distance verticale relative entre un siège de véhicule et au moins un autre composant de véhicule

(43) Date of publication of application: 30.12.2015
(73) Proprietor: Volvo Car Corporation, 40531 Göteborg (SE)
(72) Inventor: Lohse, Henrik, 3060 Espergærde (DK)
(74) Representative: Volvo Car Corporation

(56) References cited:
- DE-A1- 19 519 619
- US-A- 4 625 329

## Description

### TECHNICAL FIELD

The invention relates to a method for setting the relative vertical distance between a vehicle seat and at least a further vehicle component in a vehicle, said method comprising: providing input data related to the vertical position of a driver of said vehicle; and setting said vertical distance based on said input data.

The invention also relates to a system for setting the relative vertical distance between a vehicle seat and at least a further vehicle component in a vehicle, said system comprising a control unit configured for providing input data related to the vertical position of a driver of said vehicle and for setting said vertical distance based on said input data,

### BACKGROUND

In the field of vehicles, there are high requirements as regards the comfort and safety for a driver and for passengers who are seated in a vehicle. In particular, and for reasons of safety, it is highly important to obtain an optimal seating position for a driver in the driver's seat, in order to have high seating comfort and also a clear visual view out from the vehicle.

In particular, the driver needs a clear and unobstructed view of the surrounding traffic situation and also of the vehicle's instrument panel. Also, the driver needs a clear view of the vehicle's rear view mirrors, i.e. both the internal rear view mirror and the external rear view mirrors.

To solve the above-mentioned requirements, it is today known to provide automatic seat adjustment systems which are adapted to provide input data by detecting the position of a driver in a driver's seat and to automatically adjust the position of a vehicle seat component such as a rear view mirror or a vehicle seat depending on said input data. In this manner, the driver's position in the seat can be optimized.

The patent document DE 19519619 discloses a system which is arranged for automatically adjusting the rear view mirrors of a vehicle. More precisely, the rear view mirrors are fitted with adjusting servo motors which are controlled by a processor. Furthermore, sensors in front of the position of the driver of the vehicle are configured to monitor the position of a driver's head and automatically set the programmed optimum setting for the interior rear view mirror and the two external mirrors.

Furthermore, the document US 4689537 discloses a driving position control system for a vehicle which may store user settings for different drivers in a memory. The system comprises a power seat having adjusting means responsive to a control signal from a control unit for adjusting the position of the seat, and detecting means for detecting the seating position of the seat and supplying a position signal to the control unit. The system may then adjust the seating position together with the angle of the mirror to an optimal position. A method for setting the relative distance between a vehicle seat and a further vehicle component according to the preamble of claim 1, respectively a system for setting the relative vertical distance between the vehicle seat and a further vehicle component according to the preamble of claim 8 and a control unit for controlling and adjusting the relative distance between a vehicle seat and a further vehicle component according to the preamble of claim 15 are known from document US4625329.

Consequently, it is previously known to control the positions of various vehicle components, such as a rear view mirror, in order to obtain an optimal driving position for a driver of a vehicle. It is also known to detect the vertical position of a driver's head in order to provide the most optimal positions for the vehicle seat and the rear view mirror.

Although the two above-mentioned patent documents suggest solutions to the problem of adapting the positions of certain vehicle components to the actual position of the driver of the vehicle, there is a continuing need for improved systems for monitoring various sensors in a vehicle in order to adapt the seating position for a driver of a vehicle.

In particular, there is a need for methods and systems which are more accurate than previous ones in determining and setting the relative vertical distance between various vehicle components.

### SUMMARY

Consequently, an object of the invention is to provide a method which solves the above-mentioned problems related to prior art and provides a solution which is more accurate than previously known technology in order to set the relative vertical distance between different vehicle components, so as to provide an optimal seating position for the driver.

The object is achieved by a method for setting the relative vertical distance between a vehicle seat and at least a further vehicle component in a vehicle, said method comprising: providing input data related to the vertical position of a driver of said vehicle; and setting said vertical distance based on said input data. Furthermore, the method comprises: providing said input data based on information related to natural length changes of said driver of the vehicle due to human spine length decrease during daytime; and adjusting said vertical distance at least partly based on said input data.

The invention provides certain advantages over previously known technology, primarily due to the fact that it caters for naturally occurring length changes in the human spine during the course of a day. This means that the actual length of the driver will decrease slightly during a day, i.e after a night's sleep and rest. In this way, more accurate adjustments of the vertical position between the seat and a further vehicle component, for example a rear view mirror, can be obtained by means of the invention.

Also, the invention provides an advantage since the driver of a vehicle will not have to make any small adjustments of a rear view mirror, which otherwise would have to be made.

According to an embodiment, the method further comprises setting said vertical distance by adjusting the vertical position of the vehicle seat. This means that the position of the vehicle seat is vertically adjusted, suitably by means of a control unit, in order to compensate for the natural length changes of the driver.

According to a further embodiment, the method comprises setting the vertical distance by adjusting the vertical position of a rear view mirror in said vehicle. This means that the vertical distance between the seat and the rear view mirror can be adjusted by vertical adjustment of the position of the rear view mirror. This can also be implemented in combination with vertical adjustments of the vehicle seat.

According to an embodiment, the method comprises a step of providing said input data based on information related to natural length changes of said driver of the vehicle based on a manual setting which can be entered by said driver. This is a straightforward and effective way of manually entering input data which serve as calibration data for setting of the vehicle seat.

According to an embodiment, the method comprises a step of providing said manual setting in the form of information which relates to a correct relative vertical distance as entered by the driver in the morning and in the evening, respectively.

According to a further embodiment, the method comprises providing said input data based on information related to natural length changes of said driver of the vehicle based on an input signal provided by a image capturing device in said vehicle. This means that the position of the driver in the seat can be detected by means of a camera in an automatic manner.

According to a further aspect of the invention, it relates to a system for setting the relative vertical distance between a vehicle seat and at least a further vehicle component in a vehicle, said system comprising a control unit configured for providing input data related to the vertical position of a driver of said vehicle and for setting said vertical distance based on said input data. Furthermore, the control unit is configured for providing said input data based on information related to natural length changes of said driver of the vehicle due to human spine decrease during daytime; and for adjusting said vertical distance at least partly based on said input.

The invention can be applied in different types of vehicles, such as cars, trucks, buses and construction equipment. Although the invention will be described with respect to an application in the form of a car, the invention is not restricted to this particular type of vehicle, but may be used in other vehicles.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.
Fig. 1 shows a first embodiment of the invention with reference to a schematic side view of a part of a vehicle according in which a driver of the vehicle is seated.'
Fig. 2 shows an alternative embodiment of the invention.
Fig. 3 shows a further alternative embodiment of the invention.
Fig. 4 is a simplified flow chart explaining the operation of the invention.

### DETAILED DESCRIPTION OF EXAMPLE EMBODIMENTS OF THE INVENTION

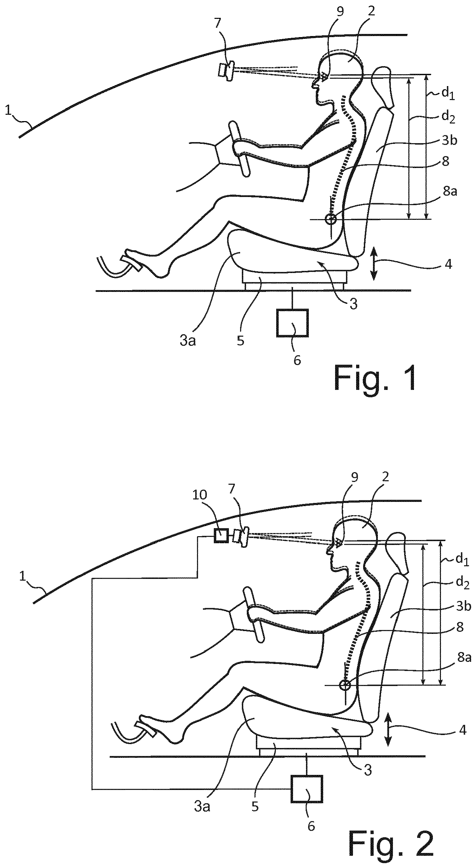

The invention will now be described with reference to embodiments of the invention and with reference to the appended drawings. With initial reference to Fig. 1, there is shown a vehicle in the form of a car 1 in which a driver 2 is seated in a vehicle seat 3 in a conventional manner. The vehicle seat 3 comprises a seat cushion 3a and a backrest 3b.

The vertical position of the vehicle seat 3 can be adjusted, as schematically indicated by means of an arrow 4 in Fig. 1. To this end, the vehicle seat 3 is supported and adjustable by means of a motorized seat adjustment unit 5. The seat adjustment unit 5 is also arranged for setting the inclination of the backrest 3b. In this manner, it is possible to adjust the height of the seat cushion 3a and also to pivot the seat backrest 3b. According to previously known technology, the settings are suitably determined by means of an actuator (not shown in Fig. 1) of conventional type by means of which the driver 2 may provide input to a computer-based control unit 6 in order to set the desired position of the vehicle seat 3. The control unit 6 is then configured for controlling various motorized units (now shown) in order to adjust the vehicle seat 3 as desired by the driver 2.

The general manner in which a seat adjustment unit 5 can be adapted for adjusting the position of the seat cushion 3a and backrest 3b based on manual input from a passenger or driver of a vehicle is known as such, and for this reason it is not described in further detail.

According to the shown embodiment of the invention, the settings of the vehicle seat 3, as implemented by means of the seat adjustment unit 5, can be controlled in an automatic manner by means of the control unit 6. Such settings are based on input related to the vertical position of a driver 2. This will be described in greater detail below.

The car 1 is furthermore provided with an additional component in the form of a rear view mirror 7 which is necessary for the driver 2 in order to assist with a clear view of the surrounding traffic. Although not shown in the drawings, the car 1 may also be equipped with conventional external rear view mirrors positioned on the exterior of the car 1.

An essential purpose with the settings of the vehicle seat 3 is to ensure that the driver 2 has a vertical position which is appropriate considering the fact that the driver's 2 head should be on a suitable level with reference to the height and position of a rear view mirror 7. In its simplest form, i.e. as shown in Fig. 1, the rear view mirror 7 can be fixedly arranged in the vehicle 7, i.e. having a fixed vertical position.

The invention is based on the insight that the length of the human spine decreases during daytime, i.e. after a night's sleep. This is due to the load which is imposed on the spine during daytime, as opposed to a corresponding situation during sleep at night when the person in question is lying down and rests. The main reason for the decrease in length of the spine during daytime is at that the spinal discs of the spine are compressed when a person stands and walks. In other words, it is the body weight of the person which compresses the spinal discs and decreases the length of the spine during daytime.

On the other hand, during sleep at night, the compressive force acting upon the spine is relieved, which means that the discs are allowed to expand. For a normal adult person, the difference in length of the spine due to these compressive forces between morning and evening is approximately 10 mm.

In order to explain the principles of the invention, the spine of the driver 2 is indicated by means of reference numeral 8 in Fig. 1. The spine 8 extends from a lower end point 8a, which generally corresponds to the position of the so-called sacrum and up to a point close to the head of the driver 2. As indicated in Fig. 1, there is defined a distance d₁ which extends from said lower end point 8a of the spine and up to the vertical position of the driver's 2 eyes 9.

The distance d₁ as shown in Fig. 1 corresponds to a situation in the morning, i.e. when the spine 8 has been relieved from compressive forces during sleep. Consequently, the length of the spine 8 has its maximum value, which means that the distance d₁ is relatively long. In contrast, the distance d₂ as shown in Fig. 1, corresponds to a situation in the evening, i.e. after a day of walking and standing up, meaning that compressive forces cause the spine 8 to be compressed slightly. This means that the distance d₂ is slightly shorter than the distance d₁. As indicated above, the difference between d₁ and d₂ is normally in the magnitude of 10 mm for an adult person of average length.

The invention is based on the principle that there is provided an adjustment of the relative vertical distance between the vehicle seat 3 and the rear view mirror 7 in order in order to compensate for the difference in length of the spine 8 between the morning and the evening. Fig. 1 indicates in a schematic manner the effect of this change of the length of the spine 8, i.e. the length as measured from the lower end point 8a to the end of the spine 8 close to the head of the driver 2 decreases during the course of a day.

Even though the changes of the length of the spine 8 are relatively small, it has a noticeable effect on the position of the rear view mirror 7 as observed by the driver 2.

To provide input data related to the changes of the spine 8, the embodiment in Fig. 1 can be configured so that the driver may operate an actuator (not shown) in the vehicle 1, for example in the form of a push button or similar, which upon actuation saves the settings of the seat 3. Such a saving process can be carried out once in the morning and once in the evening and should correspond to optimal seat positions for the driver 2 on both occassions, i.e. it should correspond to morning and evening positions wherein the driver 2 has an optimal position with a clear and correct view of the surrounding traffic situation and of the vehicle's instrument panel.

The input data originating from the above-mentioned morning and evening settings, which normally are entered one single time and not every day, then forms the basis for automatic adjustments which are used during subsequent use of the system in the car 1 during a given day. In other words, the control unit 6 is configured for automatically adjusting the relative vertical distance between the seat 3 and the rear view mirror 7 during a day, based on the driver's 2 morning and evening settings, in order to avoid further manual adjustments. These automatic adjustments are carried out by means of the control unit 6 issuing adjustment instructions to the seat adjustment unit 5 which is associated with the seat 3.

In summary, the invention as described with reference to Fig. 1 is arranged for setting the relative vertical distance between the seat 3 and the rear view mirror 7 and is arranged for providing input data related to the vertical position of a driver 2 and for setting the vertical distance based on said input data. Furthermore, the input data is based on information related to natural length changes of the driver due to human spine decrease during daytime. Adjustments of the vertical distance can then be based on said input data so that the position of the seat 3 is slightly adjusted during the day, either step by step or continuously.

An alternative embodiment of the invention is shown in Fig. 2. This embodiment generally corresponds to the embodiment shown in Fig. 1 but, in contrast to Fig. 1, it shows an embodiment in which the rear view mirror 7 does not have a fixed vertical position but can be adjusted vertically. To this end, the embodiment includes a mirror adjustment unit 10 which is arranged for setting the vertical height of the rear view mirror 7, i.e. for adjusting the rear view mirror 7 in the vertical direction.

As shown in Fig. 2, the mirror adjustment unit 10 is connected to the control unit 6 and is also configured for receiving commands from the control unit 6 as to settings of the rear view mirror 7 in the vertical direction. This means that the principles of the invention - i.e. setting the vertical distance between the seat 3 and a further component such as the rear view mirror 7 - can be obtained either by adjusting the vertical position of either the rear view mirror 7 or by adjusting the vertical position of the seat 3, or by a combination of adjusting both the rear view mirror 7 and the seat 3.

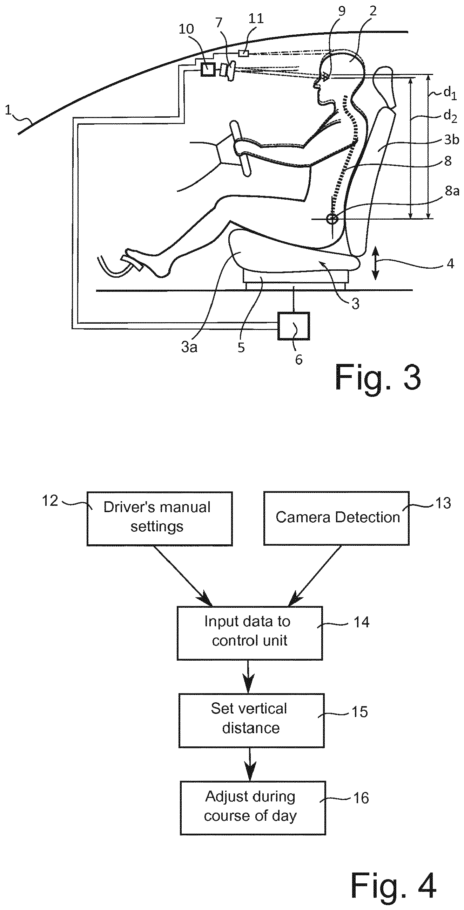

A further embodiment of the invention will now be described with reference to Fig. 3, which shows an alternative way of providing input data which relates to natural length changes of said driver 2. More precisely, the embodiment shown in Fig. 3 comprises an image capturing device such as a camera 11 which is arranged close to the head of the driver 2. The camera 11 is configured for detecting the vertical position of the head of the driver 2, suitably by image analysis of captured images which gives information of the vertical position of the head. This input data can be provided at occasions corresponding to the morning and evening settings mentioned above, or can be provided at a number of times (or continuously) during the course of a day to provide input data corresponding to the length changes of the spine 8. This input data is then fed to the control unit 6 and used in order to set the relative vertical distance between the seat 3 and the rear view mirror 7 so that the driver 2 always has an optimal position as explained above.

The difference between this embodiment and the embodiment described with reference to Figs. 1 and 2, in which the driver 2 manually enters morning and evening settings, is that the camera 11 can be used in an automatic manner for providing relevant input data.

The embodiment as shown in Fig. 3 is particularly suitable to be used in vehicles which are already equipped with a camera which is used for safety reasons, for example for detecting if a driver is drowsy and may fall asleep. Such a camera may then additionally be used for detecting the position of, for example, the head or the eyes of the driver, in order to provide input data to be used for setting the relative vertical distanced between the seat 3 and the rear view mirror 7.

Fig. 4 is a simplified flow chart describing the general principles of the invention. Initially, as mentioned above, it should be mentioned that input data related to the vertical position of the driver 2 is provided. This input data is provided either by manual settings of the driver 2, i.e. information as to the morning and evening settings as described above (step 12) or by information provided by a camera as described with reference to Fig. 3 (step 13).

Said input data is then fed to the control unit 6 (step 14). Based on the input data, the control unit 6 is configured for setting a vertical distance between the vehicle seat 3 and the rear view mirror 7 (step 15). This means that input data based on the natural length changes due to human spine decrease will be taken into account for the setting. Also, during the course of a day, the control unit 6 is suitably configured for adjusting (step 16) the setting of the vertical distance between the vehicle seat 3 and the rear view mirror 7 since the spine 8 will gradually be compressed during the day. The input data previously obtained will be used during such adjustments.

It is to be understood that the present invention is not limited to the embodiments described above and illustrated in the drawings; rather, the skilled person will recognize that many changes and modifications may be made within the scope of the appended claims.

For example, the control unit 6 can be used for storing settings for different persons, for example different members of a family using the same car, in order to provide optimal adjustments of the relative vertical distance between the seat and a further component based on each person's natural length changes due to spine compression. In such case, each person using the car would have to enter information regarding his or her identity before using the car, in order for the control unit to provide the correct settings for that particular person. Such identity information can be provided for example by means of a smart card, an NFC tag or other suitable technology.

Also, the relative vertical distance discussed above can relate to a distance between a vehicle seat and an additional vehicle component, wherein said additional vehicle component can be a mirror (i.e. both internal and external rear view mirror), an instrument panel, a steering wheel or another component. Finally, in the event that the vehicle in question is equipped with a head up display in a front windshield, the position of such a display may also be adjusted according to the principles of the invention.

## Claims

1. A method for setting the relative vertical distance between a vehicle seat (3) and at least a further vehicle component (7) in a vehicle (1), said method comprising:
- providing input data related to the vertical position of a driver (2) of said vehicle (1); and
- setting said vertical distance based on said input;
**characterized in that** said method further comprises:
- providing said input data based on information related to natural length changes of said driver (2) of the vehicle (1) due to human spine length decrease during daytime; and
- adjusting said vertical distance at least partly based on said input data.

2. Method according to claim 1, **characterized in that** it further comprises:
- setting said vertical distance by adjusting the vertical position of said vehicle seat (3).

3. Method according to claim 1 or 2, **characterized in that** it further comprises:
- setting said vertical distance by adjusting the vertical position of a rear view mirror (7) in said vehicle (1).

4. Method according to any one of the preceding claims, **characterized in that** it further comprises:
- providing said input data based on information related to natural length changes of said driver (2) of the vehicle (1) based on a manual setting which can be entered by said driver (2).

5. Method according to claim 4, **characterized in that** it further comprises:
- providing said manual setting in the form of information related to a correct relative vertical distance as entered by the driver (2) in the morning and in the evening, respectively.

6. Method according to any one of claims 1-3, **characterized in that** it further comprises:
- providing said input data based on information related to natural length changes of said driver (2) of the vehicle (1) based on an input signal provided by a image capturing device (11) in said vehicle (1).

7. Method according to any one of claims 1-6, **characterized in that** it further comprises:
- adjusting said vertical distance in a stepwise manner or continuously during a day in order to compensate for said natural length changes.

8. A system for setting the relative vertical distance between a vehicle seat (3) and at least a further vehicle component (7) in a vehicle (1), said system comprising a control unit (6) configured for providing input data related to the vertical position of a driver (2) of said vehicle (1) and for setting said vertical distance based on said input data, **characterized in that** said control unit (6) is further configured for providing said input data based on information related to natural length changes of said driver (2) of the vehicle (1) due to human spine length decrease during daytime; and for adjusting said vertical distance at least partly based on said input.

9. System according to claim 8, **characterized in that** it comprises a seat adjustment unit (5) for setting said vertical distance by adjusting the vertical position of said vehicle seat (3).

10. System according to claim 8 or 9, **characterized in that** it comprises a mirror adjustment unit (10) for setting said vertical distance by adjusting the vertical position of a rear view mirror (7) in said vehicle (1).

11. System according to any one of claims 8-10, **characterized in that** it comprises an image capturing device (11) in said vehicle (1) which is configured for capturing images relating to the driver's position in the seat (3) and for providing said input data based on information related to natural length changes of said driver (2).

12. A vehicle (1) comprising a system according to any one of claims 8-11.

13. A computer program comprising program code means for performing the steps of any of claims 1-7 when said program is run on a computer.

14. A computer readable medium carrying a computer program comprising program code means for performing the steps of any of claims 1-7 when said program product is run on a computer.

15. A control unit (6) for controlling the relative vertical distance between a vehicle seat (3) and at least a further vehicle component (7) in a vehicle (1), said control unit (6) being configured to perform the steps of the method according to any of claims 1-7.

## Patentansprüche

1. Verfahren zur Einstellung des relativen vertikalen Abstands zwischen einem Fahrzeugsitz (3) und mindestens einer weiteren Fahrzeugkomponente (7) in einem Fahrzeug (1), wobei das Verfahren umfasst:
- Liefern von Eingangsdaten in Bezug auf die vertikale Position eines Fahrers (2) des Fahrzeugs (1); und
- Einstellen des vertikalen Abstands auf der Basis des Eingangs;
**dadurch gekennzeichnet, dass** das Verfahren ferner umfasst:
- Liefern der Eingangsdaten auf der Basis von Informationen in Bezug auf natürliche Längenänderungen des Fahrers (2) des Fahrzeugs (1) aufgrund der menschlichen Wirbelsäulenlängenabnahme während des Tages; und
- Einstellen des vertikalen Abstands mindestens teilweise auf der Basis der Eingangsdaten.

2. Verfahren nach Anspruch 1, **dadurch gekennzeichnet, dass** dieses ferner umfasst:
- Einstellen des vertikalen Abstands durch Einstellen der vertikalen Position des Fahrzeugsitzes (3).

3. Verfahren nach Anspruch 1 oder 2, **dadurch gekennzeichnet, dass** dieses ferner umfasst:
- Einstellen des vertikalen Abstands durch Einstellen der vertikalen Position eines Rückspiegels (7) in dem Fahrzeug (1).

4. Verfahren nach einem der vorhergehenden Ansprüche, **dadurch gekennzeichnet, dass** dieses ferner umfasst:
- Liefern der Eingangsdaten auf der Basis von Informationen in Bezug auf natürliche Längenänderungen des Fahrers (2) des Fahrzeugs (1) auf der Basis einer manuellen Einstellung, die von dem Fahrer (2) eingegeben werden kann.

5. Verfahren nach Anspruch 4, **dadurch gekennzeichnet, dass** dieses ferner umfasst:
- Liefern der manuellen Einstellung in der Form von Informationen in Bezug auf einen korrekten relativen vertikalen Abstand, wie von dem Fahrer (2) am Morgen bzw. am Abend eingegeben.

6. Verfahren nach einem der Ansprüche 1 bis 3, **dadurch gekennzeichnet, dass** dieses ferner umfasst:
- Liefern der Eingangsdaten auf der Basis von Informationen in Bezug auf natürliche Längenänderungen des Fahrers (2) des Fahrzeugs (1) auf der Basis eines Eingangssignals, das von einer Bildaufnahmevorrichtung (11) in dem Fahrzeug (1) geliefert wird.

7. Verfahren nach einem der Ansprüche 1 bis 6, **dadurch gekennzeichnet, dass** dieses ferner umfasst:
- Einstellen des vertikalen Abstands schrittweise oder kontinuierlich während eines Tages, um die natürlichen Längenänderungen zu kompensieren.

8. System zur Einstellung des relativen vertikalen Abstands zwischen einem Fahrzeugsitz (3) und mindestens einer weiteren Fahrzeugkomponente (7) in einem Fahrzeug (1), wobei das System eine Steuereinheit (6) umfasst, die ausgelegt ist, Eingangsdaten in Bezug auf die vertikale Position eines Fahrers (2) des Fahrzeugs (1) zu liefern und den vertikalen Abstand auf der Basis der Eingangsdaten einzustellen, **dadurch gekennzeichnet, dass** die Steuereinheit (6) ferner ausgelegt ist, die Eingangsdaten auf der Basis von Informationen in Bezug auf natürliche Längenänderungen des Fahrers (2) des Fahrzeugs (1) aufgrund der menschlichen Wirbelsäulenlängenabnahme während des Tages zu liefern; und den vertikalen Abstand mindestens teilweise auf der Basis des Eingangs einzustellen.

9. System nach Anspruch 8, **dadurch gekennzeichnet, dass** dieses eine Sitzeinstelleinheit (5) zum Einstellen des vertikalen Abstands durch Einstellen der vertikalen Position des Fahrzeugsitzes (3) umfasst.

10. System nach Anspruch 8 oder 9, **dadurch gekennzeichnet, dass** dieses eine Spiegeleinstelleinheit (10) zum Einstellen des vertikalen Abstands durch Einstellen der vertikalen Position eines Rückspiegels (7) in dem Fahrzeug (1) umfasst.

11. System nach einem der Ansprüche 8 bis 10, **dadurch gekennzeichnet, dass** dieses eine Bildaufnahmevorrichtung (11) in dem Fahrzeug (1) umfasst, die ausgelegt ist, Bilder in Bezug auf die Position des Fahrers in dem Sitz (3) aufzunehmen und die Eingangsdaten auf der Basis von Informationen in Bezug auf natürliche Längenänderungen des Fahrers (2) zu liefern.

12. Fahrzeug (1), umfassend ein System nach einem der Ansprüche 8 bis 11.

13. Computerprogramm, umfassend Programmcodemittel zur Vornahme der Schritte eines der Ansprüche 1 bis 7, wenn das Programm auf einem Computer läuft.

14. Computerlesbares Medium, welches ein Computerprogramm trägt, das Programmcodemittel zur Vornahme der Schritte eines der Ansprüche 1 bis 7 umfasst, wenn das Programmprodukt auf einem Computer läuft.

15. Steuereinheit (6) zur Steuerung des relativen vertikalen Abstands zwischen einem Fahrzeugsitz (3) und mindestens einer weiteren Fahrzeugkomponente (7) in einem Fahrzeug (1), wobei die Steuereinheit (6) ausgelegt ist, die Schritte des Verfahrens nach einem der Ansprüche 1 bis 7 vorzunehmen.

## Revendications

1. Procédé pour régler la distance verticale relative entre un siège (3) de véhicule et au moins un autre composant (7) de véhicule dans un véhicule (1), ledit procédé comprenant les étapes consistant à :
- fournir des données d'entrée relatives à la position verticale d'un conducteur (2) dudit véhicule (1) ; et
- régler ladite distance verticale en fonction de ladite entrée ;
ledit procédé étant **caractérisé en ce qu**'il comprend en outre les étapes consistant à :
- fournir lesdites données d'entrée en fonction d'informations relatives à des variations de longueur naturelles dudit conducteur (2) du véhicule (1) dues à une réduction de longueur de la colonne vertébrale humaine au cours d'une journée ; et
- ajuster ladite distance verticale en fonction en partie au moins desdites données d'entrée.

2. Procédé selon la revendication 1, **caractérisé en ce qu**'il comprend en outre l'étape consistant à :
- régler ladite distance verticale en ajustant la position verticale dudit siège (3) de véhicule.

3. Procédé selon la revendication 1 ou 2, **caractérisé en ce qu**'il comprend en outre l'étape consistant à :
- régler ladite distance verticale en ajustant la position verticale d'un rétroviseur (7) dans ledit véhicule (1).

4. Procédé selon l'une quelconque des revendications précédentes, **caractérisé en ce qu**'il comprend en outre l'étape consistant à :
- fournir lesdites données d'entrée en fonction d'informations relatives à des variations de longueur naturelles dudit conducteur (2) du véhicule (1) en fonction d'un réglage manuel susceptible d'être saisi par ledit conducteur (2).

5. Procédé selon la revendication 4, **caractérisé en ce qu'**il comprend en outre l'étape consistant à :
- fournir ledit réglage manuel sous forme d'informations relatives à une distance verticale relative correcte saisie par le conducteur (2) le matin et le soir, respectivement.

6. Procédé selon l'une quelconque des revendications 1 à 3, **caractérisé en ce qu**'il comprend en outre l'étape consistant à :
- fournir lesdites données d'entrée en fonction d'informations relatives à des variations de longueur naturelles dudit conducteur (2) du véhicule (1) en fonction d'un signal d'entrée fourni par un dispositif de capture d'images (11) dans ledit véhicule (1).

7. Procédé selon l'une quelconque des revendications 1 à 6, **caractérisé en ce qu**'il comprend en outre l'étape consistant à :
- ajuster ladite distance verticale par paliers ou de façon continue au cours d'une journée dans le but de compenser lesdites variations de longueur naturelles.

8. Système pour régler la distance verticale relative entre un siège (3) de véhicule et au moins un autre composant (7) de véhicule dans un véhicule (1), ledit système comprenant une unité de commande (6) configurée pour fournir des données d'entrée relatives à la position verticale d'un conducteur (2) dudit véhicule (1) et pour régler ladite distance verticale en fonction desdites données d'entrée, ledit système étant **caractérisé en ce que** ladite unité de commande (6) est configurée en outre pour fournir lesdites données d'entrée en fonction d'informations relatives à des variations de longueur naturelles dudit conducteur (2) du véhicule (1) dues à une réduction de longueur de la colonne vertébrale humaine au cours d'une journée ; et pour ajuster ladite distance verticale en fonction en partie au moins desdites données d'entrée.

9. Système selon la revendication 8, **caractérisé en ce qu'**il comprend une unité d'ajustement (5) de siège pour régler ladite distance verticale en ajustant la position verticale dudit siège (3) de véhicule.

10. Système selon la revendication 8 ou 9, **caractérisé en ce qu**'il comprend une unité d'ajustement (10) de rétroviseur pour régler ladite distance verticale en ajustant la position verticale d'un rétroviseur (7) dans ledit véhicule (1).

11. Système selon l'une quelconque des revendications 8 à 10, **caractérisé en ce qu**'il comprend un dispositif de capture d'images (11) dans ledit véhicule (1), configuré pour capturer des images relatives à la position du conducteur sur le siège (3) et pour fournir lesdites données d'entrée en fonction d'informations relatives à des variations de longueur naturelles dudit conducteur (2).

12. Véhicule (1) comprenant un système selon l'une quelconque des revendications 8 à 11.

13. Programme d'ordinateur comprenant des moyens formant code de programme pour mettre en oeuvre les étapes de l'une quelconque des revendications 1 à 7 lorsque ledit programme est exécuté sur un ordinateur.

14. Support lisible par ordinateur portant un programme d'ordinateur comprenant des moyens formant code de programme pour mettre en oeuvre les étapes de l'une quelconque des revendications 1 à 7 lorsque ledit produit-programme est exécuté sur un ordinateur.

15. Unité de commande (6) pour commander la distance verticale relative entre un siège (3) de véhicule et au moins un autre composant (7) de véhicule dans un véhicule (1), ladite unité de commande (6) étant configurée pour mettre en oeuvre les étapes du procédé selon l'une quelconque des revendications 1 à 7.
